# EUROPÄISCHE PATENTSCHRIFT

(11) **EP 2 630 636 B1**
(45) Veröffentlichungstag und Bekanntmachung des Hinweises auf die Patenterteilung: **01.07.2015**
(21) Anmeldenummer: 11808150.4
(22) Anmeldetag: 18.10.2011
(51) Int. Cl.: G07F 7/06, B03B 9/06, B30B 9/32

(54) **VORRICHTUNG ZUR RÜCKNAHME VON LEERGUT, INSBESONDERE VON KUNSTSTOFFFLASCHEN UND METALLDOSEN**
DEVICE FOR TAKING BACK EMPTY CONTAINERS, IN PARTICULAR PLASTIC BOTTLES AND METAL CANS
DISPOSITIF DE REPRISE D'EMBALLAGES VIDES, EN PARTICULIER DE BOUTEILLES EN MATIÈRE PLASTIQUE ET DE BOÎTES MÉTALLIQUES

(30) Priorität: 18.10.2010 DE 102010048840
(43) Veröffentlichungstag der Anmeldung: 28.08.2013
(73) Patentinhaber: Envipco Holding N.V., 1015 DE Amsterdam (NL)
(72) Erfinder: HANDSCHICK, Bert, 02785 Obersdorf (DE)
(74) Vertreter: Bremer, Ulrich
(86) Internationale Anmeldenummer: PCT/DE2011/001857
(87) Internationale Veröffentlichungsnummer: WO 2012/051999

(56) Entgegenhaltungen:
- EP-A1- 0 330 714
- EP-A1- 0 591 120
- DE-U1- 29 503 823
- DE-U1-202007 000 846
- US-A- 4 411 351
- US-A- 5 248 102

## Beschreibung

Die vorliegende Erfindung betrifft eine Vorrichtung zur Rücknahme von Leergut, insbesondere von Kunststoffflaschen und Metalldosen, gemäß dem Oberbegriff des Anspruchs 1.

Eine derartige Vorrichtung ist aus der US 4,505,370 bekannt. Diese Vorrichtung dient insbesondere der Rücknahme von Metalldosen. Sie weist ein Gehäuse auf, welches Einrichtungen umhaust, die der weiteren Behandlung und gegebenenfalls Bearbeitung von eingegebenen Dosen dienen. Die Vorrichtung weist weiterhin eine von außen zugängliche Eingabeschütte auf, die Leergut als Schüttgut aufnimmt und einen in Eingaberichtung nach unten geneigten Boden aufweist. Um die Eingabe von zu großen Gegenständen zu verhindern bzw. zu erschweren, ist die Eingabeöffnung der Eingabeschütte durch ein Gitter mit einem geeigneten Raster abgedeckt. Das Gitter ist durch sich kreuzende Stäbe gebildet. Nachteilig an dieser Lösung ist, dass sich als Schüttgut eingegebenes Leergut auf dem Gitter, z.B. durch Verklemmen, sammeln kann und so den Durchtritt in die Eingabeschütte verhindert, so dass massive manuelle Eingriffe erforderlich sind, um den Durchlass in die Eingabeschütte zu gewährleisten bzw. wieder herzustellen.

Die EP 330 714 A1 offenbart eine Vorrichtung zur Rücknahme von Leergut, insbesondere von Kunststoffflaschen, welche ein Gehäuse aufweist, das Einrichtungen zur Behandlung des eingegebenen Leerguts aufnimmt. Das Gehäuse weist Eingabeöffnungen auf, die der Einzeleingabe von Kunststoffflaschen dienen.

In der DE 295 03 823 U1 ist eine Vorrichtung zur Rücknahme von Leergut, und zwar von Getränkekisten, beschrieben, mit einem Gehäuse, welches Einrichtungen zur Behandlung des eingegebenen Leerguts aufnimmt. Die Getränkekisten werden über eine Rollenbahn und ein Förderband in das Innere der Vorrichtung gefördert, wobei die Eingabeöffnung durch ein Schleusentor verschließbar ist.

Aufgabe der vorliegenden Erfindung ist es, eine gattungsgemäße Vorrichtung zur Verfügung zu stellen, mit der eine nahezu behinderungsfreie Eingabe von Leergut als Schüttgut in die Eingabeschütte gewährleistet ist, wobei gleichzeitig verhindert wird, dass zu große Gegenstände in die Vorrichtung gelangen können.

Diese Aufgabe wird erfindungsgemäß mit einer Vorrichtung zur Rücknahme von Leergut gelöst, die die Merkmale des Anspruchs 1 aufweist.

Aufgrund der erfindungsgemäß am Boden der Eingabeschütte vorgesehenen und in Eingaberichtung verlaufenden Rinnen und der Neigung des Bodens in Eingaberichtung, richtet sich auf den Boden der Eingabeschütte aufliegendes Leergut automatisch auf die Durchlassöffnungen aus, so dass es diese ohne weiteres passieren kann. Nach rutschendes Leergut richtet sich ebenfalls auf dem Boden aus. Gegebenenfalls muss nur in einem geringen Maß bei der Ausrichtung des Leerguts manuell nachgeholfen werden.

Weitere Vorteilhafte Ausgestaltungen der Erfindung ergeben sich aus den Unteransprüchen.

Die Erfindung wird nachfolgend anhand eines Ausführungsbeispiels näher erläutert. In der dazugehörigen Zeichnung zeigt in schematischer Weise:
- Fig. 1: einen Gehäuseausschnitt einer Vorrichtung zur Rücknahme von Leergut mit einer außen an das Gehäuse angesetzten Eingabeschütte, und

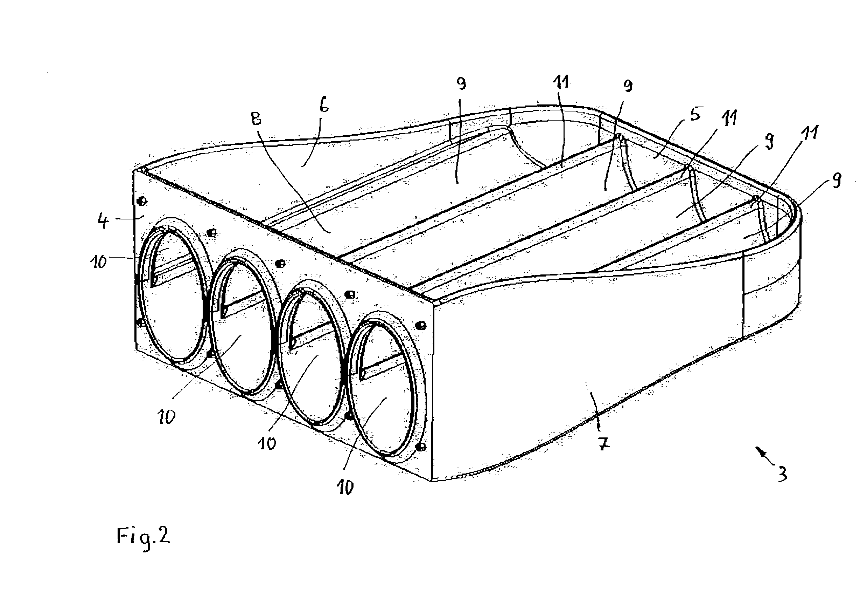

- Fig. 2: eine perspektivische Darstellung der Eingabeschütte gemäß Fig. 1 in Alleindarstellung.

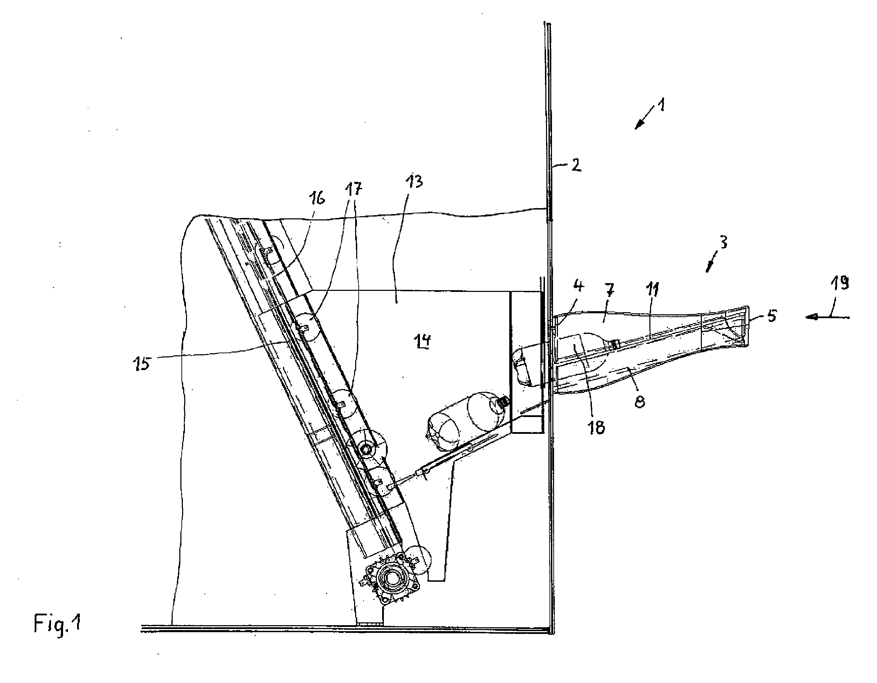

Fig. 1 zeigt einen Teil eines Gehäuses 1 einer ansonsten nicht weiter dargestellten Vorrichtung zur Rücknahme von Leergut 18. An eine lotrechte Wand 2 des Gehäuses 1 ist von außen eine Eingabeschütte 3 angebaut. Im Bereich des Anbauortes dieser Eingabeschütte 3 ist das Gehäuse 1 frei geschnitten, um die im Gehäuse 1 angeordneten Einbauten in diesem Bereich sichtbar zu machen.

Die Eingabeschütte 3 besteht, bezogen auf die Einbaulage, aus einer Rückwand 4, einer Vorderwand 5 und zwei Seitenwänden 6 und 7 sowie aus einem Boden 8, der in Eingaberichtung 19 (Fig. 1), also zum Gehäuse 1 hin, um ca. 15° nach unten geneigt ist.

Der Boden 8 ist aus vier nebeneinander angeordneten Rinnen 9 gebildet, die zwischen der Vorderwand 5 und der Rückwand 4 verlaufen und auf ihrer gesamten Länge jeweils einen gleichen Querschnitt aufweisen, nämlich den eines Halbkreises. Die Rinnen 9 münden in der Rückwand 4 jeweils in eine kreisförmige Durchlassöffnung 10, deren Radius dem der Rinnen 9 entspricht. Benachbarte Rinnen 9 gehen unter Bildung eines Grates 11 unmittelbar ineinander über. Der Querschnitt der Durchlassöffnungen 10 und damit auch der Rinnen 9 ist so gewählt, dass auf jeden Fall auch zurück zu gebendes Leergut 18 mit dem größten Durchmesser ungehindert passieren kann.

Die Eingabeschütte 3 ist mit ihrer Rückwand 4 an der lotrechten Wand 2 des Gehäuses 1 befestigt, z.B. durch Verschraubung. Die Gehäusewand 2 besitzt im Bereich des Anbauortes der Eingabeschütte 3 ein Fenster, so dass durch die Durchlassöffnungen 10 hindurch ein freier Zugang in das Innere des Gehäuses 1 vorhanden ist.

Im Inneren des Gehäuses 1 schließt sich an den Boden 8 der Eingabeschütte 3 ein ebenfalls in Eingaberichtung 19 nach unten geneigter Boden eines Eingabesammelraums 13 an, der zwei Seitenwände 14 besitzt und in Eingaberichtung 19 offen ist. Diese offene Seite des Eingabesammelraumes 13 wird durch einen Steilförderer 15 geschlossen, dessen Obertrum 16 somit gewissermaßen die Rückwand des Eingabesammelraumes 13 bildet. Der Steilförderer 15 besitzt rollenförmige Mitnehmer 17, die sich über die gesamte Breite des Eingabesammelraumes 13 erstrecken.

Zurück zu gebendes Leergut 18, z.B. PET-Flaschen, wird durch Ausschütten in die Eingabeschütte 3, z.B. aus einer Tasche, gewissermaßen als Schüttgut, eingegeben. Die zwischen den Rinnen 9 gebildeten Grate 11 wirken dabei als Leitkanten und sorgen dafür, dass das zunächst stochastisch in der Eingabeschütte 3 liegende Leergut 18 in Eingaberichtung 19 längs ausgerichtet wird und somit in die Rinnen 9 gelangt und unter Schwerkraftwirkung durch die Durchlassöffnungen 10 hindurch in den Eingabesammelraum 13 rutscht. Aufgrund der Neigung des Bodens des Eingabesammelraumes 13 rollt bzw. rutscht das Leergut 18 unter Schwerkraftwirkung zum Steilförderer 15 hin. Die Mitnehmer 17 des Steilförderers 15 durchlaufen den Eingabesammelraum 13, wodurch das Leergut 18, auf den Mitnehmern 7 aufliegend, mitgenommen wird. Die Mitnehmer 17 sind quer zur Förderrichtung des Steilförderers 15 so breit, dass mindestens zwei Stücke Leergut 18 nebeneinander auf einem Mitnehmer 17 zu liegen kommen können. Der Steilförderer 15 fördert das aufgenommene Leergut 18 zu weiteren Behandlungsstationen der Vorrichtung, die für die vorliegende Erfindung nicht wesentlich und daher nicht dargestellt sind.

## Patentansprüche

1. Vorrichtung zur Rücknahme von Leergut, insbesondere von Kunststoffflaschen und Metalldosen, mit einem Gehäuse, welches Einrichtungen zur Behandlung des eingegebenen Leerguts aufnimmt, und mit einer von außen zugänglichen Eingabeschütte, die Leergut als Schüttgut aufnimmt und einen in Eingaberichtung nach unten geneigten Boden aufweist, wobei Mittel vorgesehen sind, die eine Eingabe von zu großen Gegenständen in die Vorrichtung verhindern bzw. erschweren, **dadurch gekennzeichnet, dass** der Boden (8) der Eingabeschütte (3) mehrere in Eingaberichtung (19) verlaufende, nebeneinander angeordnete Rinnen (9) aufweist, die jeweils in eine in die Vorrichtung führende Durchlassöffnung (10) münden, deren Querschnitt so bemessen ist, dass durch die Rinnen (9) in Eingaberichtung (19) längs ausgerichtetes Leergut (18) zwängungsfrei passieren kann.

2. Vorrichtung nach Anspruch 1, **dadurch gekennzeichnet, dass** benachbarte Rinnen (9) unter Bildung eines Grates (11) unmittelbar ineinander übergehen.

3. Vorrichtung nach Anspruch 1 oder 2, **dadurch gekennzeichnet, dass** die Eingabeschütte (3) in Eingaberichtung (19) gesehen, eine Vorderwand (5), eine Rückwand (4) und zwei Seitenwände (6, 7) aufweist, wobei die Rinnen (9) zwischen der Vorderwand (5) und der Rückwand (4) verlaufen und auf ihrer gesamten Länge jeweils einen gleichen Querschnitt aufweisen.

4. Vorrichtung nach Anspruch 3, **dadurch gekennzeichnet, dass** die Rinnen (9) einen halbkreisförmigen Querschnitt aufweisen und jeweils in eine in der Rückwand (4) vorgesehene, kreisförmige Durchlassöffnung (10) münden, die den gleichen Radius wie die Rinnen (9) hat.

## Claims

1. A device for returning empty packaging, in particular plastic bottles and metal cans, having a housing which accommodates equipment for handling the inserted packaging, and having an insertion chute which is accessible from the outside, receives the empty packaging as bulk material and has a floor which is inclined downwards in the insertion direction, wherein means are provided which prevent or hinder the insertion of objects which are too large into the device, **characterised in that** the floor (8) of the insertion chute (3) has a plurality of channels (9) which extend in the insertion direction (19), are arranged adjacent to one another, and end in a respective through opening (10) which leads into the device and whereof the cross-section is dimensioned such that empty packaging (18) which is aligned lengthwise in the insertion direction can pass though the channels (9) without constraint.

2. A device according to Claim 1, **characterised in that** adjacent channels (9) merge directly into one another, forming a ridge (11).

3. A device according to Claim 1 or 2, **characterised in that,** as seen in the insertion direction (19), the insertion chute (3) has a front wall (5) a rear wall (4) and two side walls (6, 7), wherein the channels (9) extend between the front wall (5) and the rear wall (4) and have the same cross-section over their entire length in each case.

4. A device according to Claim 3, **characterised in that** the channels (9) have a semi-circular cross-section and end in a respective circular through opening (10) which is provided in the rear wall (4) and has the same radius as the channels (9).

## Revendications

1. Dispositif destiné au retour d'emballages vides, en particulier de bouteilles en matière artificielle et de boîtes métalliques, avec un corps qui reçoit des installations de traitement des emballages vides déposés et une goulotte d'entrée accessible depuis l'extérieur qui reçoit les emballages comme produits en vrac, ainsi qu'un fond incliné vers le bas, dans la direction de dépôt, des moyens étant prévus pour empêcher ou rendre difficile un dépôt d'objets trop volumineux dans le dispositif, **caractérisé en ce que** le fond (8) de la goulotte d'entrée présente plusieurs rainures (9) qui s'étendent dans la direction de dépôt (19), sont disposées les unes à côté des autres et débouchent respectivement dans une ouverture de passage (10) donnant dans le dispositif, ouverture de passage, dont le diamètre est dimensionné de façon que des emballages vides, alignés longitudinalement dans la direction de dépôt (19) par les rainures (9), peuvent passer sans forçage.

2. Dispositif suivant la revendication 1, **caractérisé en ce que** des rainures voisines (9) se confondent directement en formant une arête (11).

3. Dispositif suivant la revendication 1 ou 2, **caractérisé en ce que,** vue dans la direction de dépôt (19), la goulotte d'entrée (3) présente une paroi avant (5), une paroi arrière (4) et deux parois latérales (6, 7), les rainures (9) s'étendant entre la paroi avant (5) et la paroi arrière (4) et présentant respectivement une section transversale identique sur toute leur longueur.

4. Dispositif suivant la revendication 3, **caractérisé en ce que** les rainures (9) présentent une section transversale en forme de demi-cercle et débouchent respectivement dans une ouverture de passage circulaire (10) prévue dans la paroi arrière (4), ouverture de passage (10), dont le rayon est identique à celui des rainures (9).
